# EUROPEAN PATENT SPECIFICATION

(11) **EP 1 859 972 B1**
(45) Date of publication and mention of the grant of the patent: **28.12.2011**
(21) Application number: 07108812.4
(22) Date of filing: 24.05.2007
(51) Int. Cl.: B60G 17/052, B60T 17/06

(54) **Pneumatic spring installation for commercial vehicles**
Druckfederinstallation für Nutzfahrzeuge
Installation de ressorts pneumatiques dans des véhicules commerciaux

(30) Priority: 24.05.2006 DE 102006024279
(43) Date of publication of application: 28.11.2007
(73) Proprietor: IVECO MAGIRUS AG, 89079 Ulm (DE)
(72) Inventor: Stuerner, Johann, 89079 Ulm (DE)
(74) Representative: Borsano, Corrado

(56) References cited:
- EP-A- 0 950 602
- WO-A-99/43527
- GB-A- 2 184 405
- US-A- 6 149 246
- US-B1- 6 318 813

## Description

The invention concerns a pneumatic spring installation for commercial vehicles which also have a compressed air-operated brake system with service brake and parking brake. Commercial vehicles with pneumatic suspension on the rear axle or also on the front axle, are known in various embodiments. Usually the pneumatic spring installations of commercial vehicles are provided with a separate air supply. For this purpose, air reservoirs of different sizes are installed in the chassis. In addition to these air reservoirs for the pneumatic suspension, further reservoirs are required for the supply of the braking circuits, mostly the service brake and parking brake. Moreover, in many cases there are ancillary consumer devices which have to be supllied with compressed air e.g. a pneumatic suspension of the driver's cabin. The pneumatic system of the parking brake is used, in many cases, as the supply for a trailer.

For the reasons given, commercial vehicles often have a large number of air reservoirs whose installation costs have to be taken into account and whose additional weight increases the total weight of the vehicle.

*US patent document* US-A-6149246 *discloses a compressed-air supply system for goods vehicles, especially for trucks, comprising an air-suspension system and a brake system; the compressed-air supply system includes compressed air tanks for supplying the brake system with compressed air.*

*EP patent document* EP-A-0950602 *discloses a self-steering axle suspension system of parallelogram type for wheeled vehicle which shows air control means for automatically adjusting auxiliary axle's caster and allowing the vehicle operator to control the adjustment of suspension capacity and vertical axle position.*

*International patent document* WO-99/43527-A *discloses an air dryer and reservoir assembly for providing compressed air from an air compressor on heavy motor vehicle which includes an air dryer connected to receive compressed air from air compressor and a secondary reservoir for storing compressed air passing through the air dryer.*

*US patent document* US-B1-6318813 *discloses an emergency brake backup system for selectively interconnecting the air suspension as an additional reservoir to the air brake system.*

The underlying objective of the invention is to develop a pneumatic spring installation for commercial vehicles in such a way that only as few air reservoirs as possible are needed.

To achieve this objective, the pneumatic spring installation according to the invention is characterized in that the pneumatic suspension is connected to the compression air reservoir of the brake system for its compressed air supply.

The pneumatic spring installation is thereby supplied by the compressor or the air reservoirs of the brake system according to claim 1.

As far as a vehicle is concerned which is intended for the attachment of trailer skips or swap trailers, by which a change in the chassis height of the traction vehicle is necessary during coupling and de-coupling of a trailer skip, the air supply of the pneumatic spring installation can likewise be taken from the air reservoirs of the brake system. The air consumption during raising of the chassis is comparatively low, so that the raising of the chassis can be carried out without significant delay.

The missing reservoirs of the pneumatic spring installation can be compensated for by operating the pneumatic system of the brake system with higher energy reserves. This can be achieved by integrating the volume of air of the parking brake into the service brake circuits. In this way, the total volume of air of the brake system increases and more energy in total is stored in the reservoirs than in systems with separate air reservoirs in the parking brake installation.

It is evident that a reduction in the number of air reservoirs required, achieved by the system according to the invention, results in weight and cost advantages. Conversely, the potential payload of the commercial vehicle can be increased and the lower empty weight of the vehicle reduces fuel consumption.

The pneumatic system of the parking brake is integrated in the pneumatic system of the service brake. As already pointed out, this increases the energy which can be potentially stored by the pneumatic system. This energy increase can thus be achieved in that the pneumatic system of the parking brake, normally operated at low pressure, is integrated in the service brake circuit

The integration of the parking brake circuit in the service brake system is not inherently new. The alternative of dispensing with a separate air reservoir for the parking brake circuit has already been used. However, up until now it has not been seen that a separate air reservoir for the pneumatic suspension is also unnecessary if, as mentioned, higher energy reserves are used.

The invention thus enables a considerable weight and cost saving.

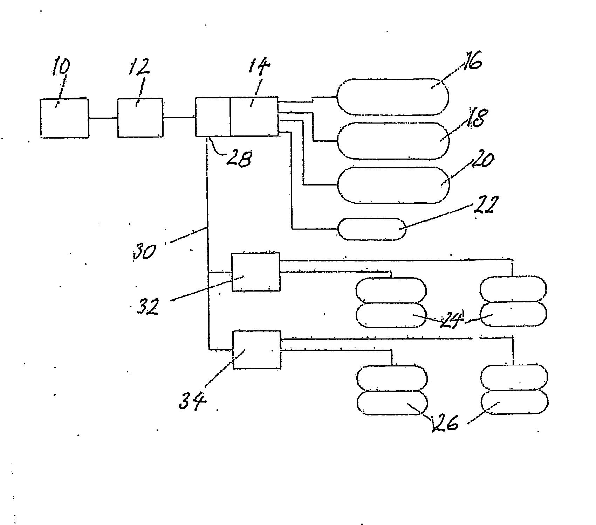

The following explains in more detail, with the aid of the attached drawing, preferred examples of embodiments of the invention.

The only drawing shows schematically an air supply system for the brake system and air filter system according to the invention.

The pneumatic system according to the invention for a commercial vehicle with compressed air-operated brakes and pneumatic suspension features a compressor 10 as central supply source. This compressor delivers compressed air via a pressure controller/air drier 12 and a safety valve 14 towards two air reservoirs 16,18 for the brake circuit as well as a smaller reservoir 20 for ancillary consumer devices.

The supply to the parking brake takes place via the safety valve 14 and a pipeline 22, without a separate air reservoir being available. As mentioned, the volume of air of the parking brake is combined with the volume of air of the service brake.

24 and 26 denote the pneumatic bellows of the rear and front axles. The pneumatic bellows are filled with compressed air via a separate connection 28 on the safety valve 14. During this operation of filling the pneumatic bellows 24,26, compressed air reaches the pneumatic bellows via the pressure controller and air drier 12 and a pipeline 30, emanating from connection 28, as well as via control valves 32,34 for the rear and front axes. For vehicles with pneumatic suspension at the front axle, the pneumatic system of the front axle with the pneumatic bellows 26 is supplied with compressed air via the control valve 34.

If the compressor 10 has been switched off and consequently delivers no compressed air, the pneumatic suspension system is supplied with compressed air via the safety valve 14 with the aid of the existing air reservoirs 16,18,20. The pneumatic spring system thus needs no separate air reservoir.

The return flow of compressed air via the control valve 14 takes place for as long as the compressor 10 is switched off. If the compressor 10 has been switched on again, the supply of the pneumatic bellows 24,26 takes place directly via the pipeline 30 and the control valves 32,34.

The activation of the compressor 10 is carried out automatically at a predetermined loss of air pressure in the reservoirs 16,18,20.

The solution described here is suitable for vehicles with a specific, mainly electronic air processing, by which an air reservoir for the parking brake and the supply of a trailer can be omitted.

## Claims

1. Commercial vehicle having
- a compressed air-operated brake system with service brake and parking brake having compressed air reservoirs (16,18),
- the parking brake system being integrated in the pneumatic system of the service brake,
- a pneumatic spring installation (24,26,32,34) connected to said compressed air reservoirs (16,18) of the brake system for the supply of compressed air
- a smaller reservoir (20) for ancillary consumer devices
- a compressor (10) delivering compressed air via a pressure controller/air drier (12) and a safety valve (14) towards said air reservoirs (16,18) for the brake circuit as well as said smaller reservoir (20) for ancillary consumer device, where by the supply to the parking brake system takes place via the safety valve (14) and a pipeline (22)
**characterised in that** said compressor (10) delivers compressed air via the pressure controller /air drier (12) directly to the safety valve (14), and the pneumatic spring installation (24,26,32,34) is connected both to the compressor (10) as well as to the compressed air reservoirs (16,18,20) via the safety valve (14) to be supplied with compressed air via the safety valve (14) alternatively from the air reservoirs (16,18,20) when the compressor (10) is switched off or from the compressor (10) when the compressor (10) is switched on,
that the activation of the compressor (10) is carried out automatically at a predetermined loss of air pressure in the reservoirs (16, 18, 20).

## Patentansprüche

1. Nutzfahrzeug, mit
- einem druckluftbetriebenen Bremssystem mit Betriebsbremse und Parkbremse, die Druckluftreservoirs (16, 18) aufweisen,
- wobei das Parkbremssystem in das pneumatische System der Betriebsbremse integriert ist,
- einer Luftfederinstallation (24, 26, 32, 34), die an die Druckluftreservoirs (16, 18) des Bremssystems für die Zufuhr von Druckluft angeschlossen ist,
- einem kleineren Reservoir (20) für zusätzliche Benutzereinrichtungen,
- einem Kompressor (10), der Druckluft über einen Druckregler/- Lufttrockner (12) und ein Sicherheitsventil (14) in Richtung der Luftreservoirs (16, 18) für den Bremskreis sowie des kleineren Reservoir (20) für eine zusätzliche Benutzereinrichtung liefert, wodurch die Zufuhr zu dem Parkbremssystem über das Sicherheitsventil (14) und eine Rohrleitung (22) stattfindet,
**dadurch gekennzeichnet, dass** der Kompressor (10) Druckluft über den Druckregler/Lufttrockner (12) direkt zu dem Sicherheitsventil (14) liefert, und die Luftfederinstallation (24, 26, 32, 34) an sowohl den Kompressor (10) als auch an die Druckluftreservoirs (16, 18, 20) über das Sicherheitsventil (14) zur Versorgung mit Druckluft über das Sicherheitsventil (14) alternativ von den Luftreservoirs (16, 18, 20), wenn der Kompressor (10) ausgeschaltet ist, oder von dem Kompressor (10), wenn der Kompressor (10) eingeschaltet ist, angeschlossen ist, und
dass die Aktivierung des Kompressors (10) automatisch bei einem vorbestimmten Luftdruckverlust in den Reservoirs (16, 18, 20) ausgeführt wird.

## Revendications

1. Véhicule commercial ayant :
- un système de freinage à air comprimé avec un frein de service et un frein de stationnement, ayant des réservoirs d'air comprimé (16, 18),
- le système de frein de parking étant intégré dans le système pneumatique du frein de service,
- une installation de ressort pneumatique (24, 26, 32, 34) raccordée auxdits réservoirs d'air comprimé (16, 18) du système de freinage pour l'alimentation en air comprimé.
- un réservoir plus petit (20) pour les dispositifs consommateurs auxiliaires,
- un compresseur (10) fournissant l'air comprimé par le biais d'un contrôleur de pression/déshydrateur d'air (12) et un clapet de sûreté (14) vers lesdits réservoirs d'air (16, 18) pour le circuit de freinage, ainsi que vers ledit réservoir plus petit (20) pour le dispositif consommateur auxiliaire, moyennant quoi l'alimentation au système de frein de parking s'effectue par le biais du clapet de sûreté (14) et d'une conduite (22),
**caractérisé en ce que** ledit compresseur (10) fournit de l'air comprimé par le biais du contrôleur de pression / déshydrateur d'air (12) directement au clapet de sûreté (14), et l'installation de ressort pneumatique (24, 26, 32, 34) est raccordée à la fois au compresseur (10), ainsi qu'aux réservoirs d'air comprimé (16, 18, 20), par le biais du clapet de sûreté (14), pour être alimentée avec de l'air comprimé par le biais du clapet de sûreté (14), alternativement depuis les réservoirs d'air (16, 18, 20) quand le compresseur (10) est éteint ou depuis le compresseur (10) quand ledit compresseur (10) est allumé,
et **en ce que** l'activation du compresseur (10) est réalisée automatiquement lors d'une perte de pression d'air prédéterminée dans les réservoirs (16, 18, 20).
